(19) Europäisches Patentamt
European Patent Office
Office européen des brevets

(11) **EP 4 000 727 A1**

(12) **EUROPEAN PATENT APPLICATION**

(43) Date of publication:
**25.05.2022 Bulletin 2022/21**

(51) International Patent Classification (IPC):
**B01J 23/72** (2006.01)     **B01D 53/94** (2006.01)
**B01J 29/80** (2006.01)

(21) Application number: **21183098.9**

(22) Date of filing: **01.07.2021**

(52) Cooperative Patent Classification (CPC):
**B01J 29/80; B01D 53/9472; B01J 29/7615;
B01J 29/763**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.11.2020 KR 20200152737**

(71) Applicants:
 • **Hyundai Motor Company**
  **Seoul 06797 (KR)**
 • **Kia Corporation**
  **Seocho-gu**
  **Seoul 06797 (KR)**
 • **Korea University Research and Business
  Foundation**
  **Seoul 02841 (KR)**

(72) Inventors:
 • **KANG, Chun Yong**
  **18280 Hwaseong-si, Gyeonggi-do (KR)**
 • **KIM, Chang Hwan**
  **18280 Hwaseong-si, Gyeonggi-do (KR)**
 • **CHOI, Jungkyu**
  **02841 Seoul (KR)**
 • **JANG, Eun-Hee**
  **02857 Seoul (KR)**
 • **KIM, Jin Seong**
  **02856 Seoul (KR)**
 • **NOH, Hwiyoon**
  **02857 Seoul (KR)**
 • **CHOI, La Young**
  **02577 Seoul (KR)**

(74) Representative: **Isarpatent
Patent- und Rechtsanwälte Barth
Charles Hassa Peckmann & Partner mbB
Friedrichstrasse 31
80801 München (DE)**

(54) **CATALYST FOR ADSORBING HYDROCARBON AND HYDROCARBON TRAP COMPRISING THE SAME**

(57)     A catalyst for adsorbing hydrocarbon includes a first catalyst configured to adsorb short-chain hydrocarbons and including zeolites having a pore size of about 0.30 nm to about 0.44 nm and a second catalyst configured to adsorb a long-chain hydrocarbon and including zeolites ion-exchanged with a transition metal. The catalyst can be coated on a substrate of a hydrocarbon trap.

EP 4 000 727 A1

## Description

### CROSS-REFERENCE TO RELATED APPLICATIONS

This application claims priority to and the benefit of Korean Patent Application No. 10-2020-0152737 filed in the Korean Intellectual Property Office on November 16, 2020, the entire contents of which are incorporated herein by reference.

### TECHNICAL FIELD

The present disclosure relates to a catalyst for adsorbing hydrocarbon and a hydrocarbon trap including the catalyst.

### BACKGROUND

An exhaust gas of a gasoline vehicle is purified by a three-way catalyst, and when a temperature of the catalyst is greater than or equal to 400 °C, a purification performance of nearly 100% may be obtained. However, in the cold-start section immediately after engine start, the three-way catalyst does not operate normally, so the exhaust gas is not purified and is discharged into the atmosphere. In particular, it is known that about 70% of the total EM is emitted from the cold-start section of hydrocarbon (HC).

As an approach against these problems, a zeolite-based catalyst for adsorbing hydrocarbon (HC trap) is introduced into the exhaust gas system, the catalyst for adsorbing hydrocarbon temporarily adsorbs the hydrocarbons discharged from the cold-start section until the three-way catalyst warm-up is completed, and then it is purified through a three-way catalyst when desorbed from a catalyst for adsorbing hydrocarbon at the end of the three-way catalyst warm-up.

In most studies reported to date, zeolite-based catalysts for adsorbing hydrocarbon have insufficient high-temperature heat resistance, and their structure collapses above 850 °C. Therefore, only the method of installing and using it on the underfloor has been examined. However, in the underfloor, a warm-up rate of the three-way catalyst is slow, so it is difficult to apply the catalyst for adsorbing hydrocarbon technology because a hydrocarbon slip occurs from the catalyst for adsorbing hydrocarbon before activation of the three-way catalyst.

In addition, the types of short-chain hydrocarbons ($C_1H_x$ to $C_5H_y$) which are not adsorbed in the hydrocarbon trap and are discharged at the same time as the engine starts account for about 30% of the total hydrocarbon discharge. In order to cope with the enforced exhaust regulation (Fleet Average Standard/SULEV30) in the future, it is urgent to improve the purification performance of short-chain hydrocarbons.

## SUMMARY

Embodiments of the present disclosure provide a catalyst for adsorbing hydrocarbon that improves hydrocarbon discharge in the cold-start section by physically delaying diffusion of short-chain hydrocarbons until the activation point of the three-way catalyst for purification of short-chain hydrocarbons that are difficult to be chemically adsorbed.

Other embodiments of the present disclosure provide a hydrocarbon trap including the catalyst for adsorbing hydrocarbon.

According to an embodiment of the present disclosure, a catalyst for adsorbing hydrocarbon includes a first catalyst configured to adsorb short-chain hydrocarbons and including zeolites having a pore size of about 0.30 nm to about 0.44 nm, and a second catalyst configured to adsorb a long-chain hydrocarbon and including zeolites ion-exchanged with transition metals.

The first catalyst may include a zeolite including CHA, DDR, SAPO-34, LTA, ABW, AEI, AVE, AFT, AFX, AVL, EAB, EEI, ERI, GME, IFY, IRN, KFI, LEV, LTL, LTN, MER, MOZ, OFF, PAU, RHO, RTE, SAS, SAT, SAV, SBS, SBT, SFW, SZR, TSC, UFI, WEN, or a combination thereof.

The second catalyst may include a zeolite including ZSM-5, BEA, MOR, Y, or a combination thereof.

The zeolite of the first catalyst may be ion-exchanged with a transition metal.

The transition metal may include Cu, Fe, Co, Ti, Zn, Ag, Mn, Ni, Ce, or a combination thereof.

The first catalyst may include about 0.1 wt% to about 3 wt% of the transition metal based on a total weight of the first catalyst.

The second catalyst may include about 0.1 wt% to about 10 wt% of the transition metal based on a total weight of the second catalyst.

The catalyst for adsorbing hydrocarbon may include the first catalyst and the second catalyst in a weight ratio of about 1:9 to about 9:1.

When hydrocarbon adsorption and desorption are evaluated by performing hydrothermal degradation of the first catalyst or the second catalyst with air including about 10 wt% of water at about 800 °C for about 24 hours, filling 60 mg of the first catalyst or the second catalyst in a reaction tube, performing pretreatment under a He flow at about 600 °C for about 30 minutes, supplying a mixed gas including $C_3H_6$ (162 ppm), $C_7H_8$ (162 ppm), CO (0.58 volume%), $H_2$ (0.19 volume%), $O_2$ (0.60 volume%), $CO_2$ (13.36 volume%), $H_2O$ (10 volume%), and Ar/He conveying gas (balance volume%) at about 70 °C for about 5 minutes at about 100 cc/min, and then raising the temperature to about 300 °C at a rate of about 53 °C/min, the first catalyst may have a treatment efficiency of greater than or equal to about 5% of the $C_3H_6$, and the second catalyst may have a treatment efficiency of greater than or equal to about 15% of the $C_7H_8$.

The zeolite of the second catalyst may have a pore size of about 0.45 nm to about 0.90 nm.

According to another embodiment of the present disclosure, a hydrocarbon trap includes a substrate, and a catalyst layer coated on the substrate, and the catalyst layer includes the catalyst for adsorbing hydrocarbon.

In the catalyst layer, the first catalyst and the second catalyst may be mixed.

The catalyst layer may include a first region coated with the first catalyst and a second region coated with the second catalyst, wherein the first region is disposed in front of the exhaust gas stream, and the second region is disposed in the rear of the exhaust gas stream.

The catalyst for adsorbing hydrocarbon of the present disclosure physically delays the diffusion of short-chain hydrocarbons until the activation point of the three-way catalyst in order to purify short-chain hydrocarbons that are difficult to be chemically adsorbed, thereby improving hydrocarbon discharge in the cold-start section.

## BRIEF DESCRIPTION OF THE DRAWINGS

FIGS. 1 to 3 are graphs showing evaluation results of hydrocarbon adsorption/desorption of catalysts prepared in Preparation Examples 1-1 to 1-3.

FIG. 4 is a graph showing the hydrocarbon adsorption evaluation results of the catalysts for adsorbing hydrocarbon prepared in Examples 1 to 3.

## DETAILED DESCRIPTION OF ILLUSTRATIVE EMBODIMENTS

The advantages and features of the present disclosure and the methods for accomplishing the same will be apparent from the embodiments described hereinafter with reference to the accompanying drawings. However, an implemented form may not be limited to exemplary embodiments disclosed below. Unless otherwise defined, all terms (including technical and scientific terms) used herein have the same meaning as commonly understood by one of ordinary skill in the art. In addition, terms defined in a commonly used dictionary are not to be ideally or excessively interpreted unless explicitly defined.

In addition, unless explicitly described to the contrary, the word "comprise", and variations such as "comprises" or "comprising," will be understood to imply the inclusion of stated elements but not the exclusion of any other elements.

Further, the singular includes the plural, unless mentioned otherwise.

A catalyst for adsorbing hydrocarbon according to an embodiment of the present disclosure includes a first catalyst configured to adsorb short-chain hydrocarbons, and a second catalyst configured to adsorb long-chain hydrocarbon.

The short-chain hydrocarbon may be a hydrocarbon having 1 to 5 carbon atoms included in automobile exhaust gas, and may be represented by the general formula $C_1H_x$ to $C_5H_y$, and may be, for example, $C_2H_2$, $C_2H_6$, $C_3H_6$, $C_4H_8$, or $C_5H_{12}$. The long-chain hydrocarbon may be a hydrocarbon having 6 or more carbon atoms included in automobile exhaust gas, and may be, for example, $C_7H_8$.

The catalyst for adsorbing hydrocarbon may include the first and second catalysts as a mixture or as zone coating in which the first and second catalysts are separately disposed in different regions.

The first catalyst may include zeolite having a pore size corresponding to a size of the short-chain hydrocarbon in order to physically postpone diffusion of the short-chain hydrocarbon which is difficult to chemically adsorb. Accordingly, the zeolite of the first catalyst may have a pore size of about 0.30 nm to about 0.44 nm. When the zeolite of the first catalyst has a pore size of less than about 0.30 nm, the short-chain hydrocarbon may not be adsorbed, and when the zeolite of the first catalyst has a pore size of greater than about 0.44 nm, the short-chain hydrocarbon may be less adsorbed due to adsorption of the long-chain hydrocarbon.

The first catalyst, in the hydrocarbon adsorption evaluation after the hydrothermal degradation, may exhibit $C_3H_6$ treatment efficiency of greater than or equal to about 5%, for example, about 10% to about 15%. In the hydrocarbon adsorption evaluation after the hydrothermal degradation, when the $C_3H_6$ treatment efficiency of the first catalyst is less than about 5%, the zeolite structurally collapses, and accordingly, hydrocarbon adsorption performance thereof may not be expected.

The treatment efficiency of $C_3H_6$ may be calculated by Equation 1.

$$[\text{Equation 1}]$$

$$\left[1 - \frac{Q_{Out}}{Q_{In}}\right] \times 100 > A$$

In Equation 1,

$Q_{In}$ indicates an amount of hydrocarbon fed to the catalyst for adsorbing hydrocarbon,
$Q_{Out}$ indicates an amount of hydrocarbon discharged through the catalyst for adsorbing hydrocarbon, and
A is a number of 5 or more and indicates treatment efficiency.

Equation 1 is to calculate hydrocarbon treatment efficiency of the catalyst for adsorbing hydrocarbon, by feeding hydrocarbon to the catalyst for adsorbing hydrocarbon and measuring the fed amount of the hydrocarbon and the discharged amount of the hydrocarbon from the catalyst for adsorbing hydrocarbon and then, using a ratio of the fed hydrocarbon amount to catalyst for adsorbing hydrocarbon up to 300 °C and the discharged hydrocarbon amount through the catalyst for adsorbing hydrocarbon.

The hydrothermal degradation of the catalyst may be, for example, performed with air including about 10 wt% of water at about 800 °C for about 24 hours. The hydrocarbon adsorption and desorption of the catalyst are evaluated by filling 60 mg of the catalyst in a reaction tube, performing pretreatment under a He flow at about 600 °C for about 30 minutes, supplying a mixed gas including $C_3H_6$ (162 ppm), $C_7H_8$ (162 ppm), CO (0.58 volume%), $H_2$ (0.19 volume%), $O_2$ (0.60 volume%), $CO_2$ (13.36 volume%), $H_2O$ (10 volume%), and Ar/He-conveying gas (balance volume%) at about 70 °C for about 5 minutes for at about 100 cc/min, and then raising the temperature to about 300 °C at a rate of about 53 °C/min.

In order to satisfy these conditions, the zeolite of the first catalyst may be an 8 membered ring zeolite, and may include, for example CHA, DDR, SAPO-34, LTA, ABW, AEI, AVE, AFT, AFX, AVL, EAB, EEI, ERI, GME, IFY, IRN, KFI, LEV, LTL, LTN, MER, MOZ, OFF, PAU, RHO, RTE, SAS, SAT, SAV, SBS, SBT, SFW, SZR, TSC, UFI, WEN, or a combination thereof.

The zeolite of the first catalyst may be ion-exchanged with a transition metal, and may be ion-exchanged with a transition metal including, for example, Cu, Fe, Co, Ti, Zn, Ag, Mn, Ni, Ce, or a combination thereof.

The transition metal may be included in an amount of about 0.1 wt% to about 3 wt%, for example about 0.1 wt% to about 1 wt% based on a total weight of the first catalyst. When the transition metal is included in an amount of less than about 0.1 wt%, the short-chain hydrocarbon may not be adsorbed under a moisture-containing condition in the hydrocarbon adsorption evaluation, and when the transition metal is included in an amount of greater than about 3 wt%, the zeolite may structurally collapse after the hydrothermal degradation.

The second catalyst is a catalyst having a relatively superior long-chain hydrocarbon adsorption performance, and includes a zeolite ion-exchanged with a transition metal. The zeolite of the second catalyst may have a pore size of about 0.45 nm to about 0.90 nm.

The second catalyst may exhibit $C_7H_8$ treatment efficiency of greater than or equal to about 15%, for example, about 20% to about 40% in the hydrocarbon adsorption evaluation after the hydrothermal degradation. When the $C_7H_8$ treatment efficiency of the second catalyst is less than about 15% after the hydrothermal degradation in the hydrocarbon adsorption evaluation, the zeolite structurally collapses, and accordingly, hydrocarbon adsorption performance thereof may not be expected. The hydrothermal degradation and the hydrocarbon adsorption evaluation of the second catalyst are performed under the same conditions as in those of the first catalyst, which will not be repeatedly explained.

The zeolite of the second catalyst may include, for example, a synthetic or natural zeolite including Y-type zeolite (FAU), MFI-type zeolite, mordenite-type zeolite, beta-type zeolite (BEA), X-type zeolite, Y-type zeolite, L-type zeolite, or ZSM-5, and specifically, ZSM-5, BEA, MOR, Y, or a combination thereof.

The zeolite of the second catalyst may have a Si/Al mole ratio of about 11.5 to about 150, for example, about 11.5 to about 70. When the Si/Al mole ratio of the zeolite is less than about 11.5, the structure of the zeolite may collapse after hydrothermal degradation, while when it exceeds about 150, the adsorption amount may be small.

The zeolite of the second catalyst may be ion-exchanged with a transition metal, and may be ion-exchanged with a transition metal including, for example, Cu, Fe, Co, Ti, Zn, Ag, Mn, Ni, Ce, or a combination thereof.

The transition metal may be included in an amount of about 0.1 wt% to about 10 wt%, for example about 0.1 wt% to about 3 wt% based on a total weight of the second catalyst. When the transition metal is less than about 0.1 wt%, the long-chain hydrocarbon may not be adsorbed under a moisture-containing condition in the hydrocarbon adsorption evaluation, and when the transition metal is greater than about 10 wt%, the zeolite may structurally collapse after the hydrothermal degradation.

A method of ion-exchanging the zeolite with the transition metal is not particularly limited in the present disclosure, but for example, the wet impregnation method of adding the zeolite to the transition metal precursor-containing solution to impregnate the transition metal into the zeolite may be used.

The catalyst for adsorbing hydrocarbon may include the first catalyst and the second catalyst in a weight ratio of about 1:9 to about 9:1, for example, about 3:7 to about 7:3, or about 4:6 to about 6:4. When the first catalyst is included in a weight ratio of less than about 1, the short-chain hydrocarbon may not be adsorbed, and when the weight ratio is greater than about 9, the long-chain hydrocarbon adsorption performance may be deteriorated.

Another embodiment of the present disclosure, a hydrocarbon trap includes a substrate and a catalyst layer coated on the substrate, and the catalyst layer includes the catalyst for adsorbing hydrocarbon.

The substrate may be any substrate used in a catalyst for purifying automobile exhaust, for example, substrate with a metal or ceramic honeycomb structure, and a monolithic penetrating substrate having a plurality of fine and parallel gas flow passages connected from the inlet to the outlet and open to a fluid flow.

On the walls of the passages of the substrate, a catalyst material is wash-coated, so that gas flowing through the passages may contact the catalyst material. The passages of the monolithic substrate may be thin-walled channels having any appropriate cross-section shape, for example, a trapezoid, a rectangle, a square, a sign waveform, a hexagon, an oval, a circle, and the like. Such structures may contain greater than or equal to about 60 to about 1200 gas inlet openings (i.e., cells) per 1 inch$^2$ (cpsi) of the cross-section. A representative commercially-available substrate is Corning 400/6, which is formed of a Cordierite material and has cell density of about 400 cpsi and a wall thickness of about 6 mm.

The ceramic substrate may be any suitable refractory material, such as cordierite, cordierite-a alumina, silicon nitride, zircon mullite, spodumene, alumina-silica magnesia, zircon silicate, silmanite, magnesium silicate, zircon, petalite, α alumina, aluminosilicate, and the like.

The metal substrate may include a heat resistant metal such as titanium and stainless steel and its metal alloy and also, other alloys including iron as a substantial or main component. The alloys may include at least one of nickel, chromium, and/or aluminum, and these metals may be included in an amount of greater than or equal to about 15 wt% based on the total weight of an alloy. For example, about 10 wt% to about 25 wt% of chromium, about 3 wt% to about 8 wt% of aluminum and at most about 20 wt% of nickel may be included. The alloys may include at least one other metal, for example, manganese, copper, vanadium, titanium, and the like in a small amount or a trace amount. The metal substrate may have various shapes such as a corrugated or monolithic shape and the like. The representative commercially-available metal substrate may be made by Emitec Inc.

The catalyst layer may be coated on the substrate as a mixture of the first and second catalysts, or a first catalyst may be separately coated in a first region located in front of the exhaust gas stream (i.e., around the inlet of the substrate), while the second catalyst is coated in a second region located in rear of the exhaust gas stream (i.e., around the outlet of the substrate).

Hereinafter, specific examples of the invention are described. However, the examples described below are for illustrative purposes only, and the scope of the invention is not limited thereto.

**[Preparation Example 1: Preparation of Transition Metal Ion-exchanged Zeolite Catalyst]**

**(Preparation Example 1-1)**

Cu was impregnated into H-CHA zeolite by using a wet impregnation method.

Specifically, copper nitrate trihydrate (Cu(NO$_3$)$_2$·3H$_2$O, 98%, Sigma-Aldrich Co.,

Ltd.) was dissolved in deionized water to prepare a 0.04 M copper nitrate II (Cu(NO$_3$)$_2$) solution. The H-CHA zeolite particles were respectively added to the copper nitrate solution, which were adjusted to impregnate 1 wt%, 3 wt%, 5 wt%, and 10 wt% of Cu.

The mixtures were respectively put in a rotary evaporator to all remove water, and Cu-impregnated H-CHA zeolite recovered therefrom were dried at 100 °C for 3 hours and calcined at 550 °C under air flow 200 mL/min by increasing the temperature at 1 °C/min for 6 hours.

**(Preparation Example 1-2)**

Cu was impregnated into H-ZSM-5 zeolite by using a wet impregnation method.

Specifically, copper nitrate trihydrate (Cu(NO$_3$)$_2$·3H$_2$O, 98%, Sigma-Aldrich Co.,

Ltd.) was dissolved in deionized water to prepare a 0.04 M copper nitrate II (Cu(NO$_3$)$_2$) solution. The H-ZSM-5 zeolite particles were respectively added to the copper nitrate solution, which were adjusted to impregnate 1 wt%, 3 wt%, 5 wt%, and 10 wt% of Cu.

The mixtures were respectively put in a rotary evaporator to all remove water, and Cu-impregnated H-ZSM-5 zeolite recovered therefrom were dried at 100 °C for 3 hours and calcined at 550 °C under air flow 200 mL/min by increasing the temperature at 1 °C/min for 6 hours.

**(Preparation Example 1-3)**

Cu was impregnated into H-BEA zeolite by using a wet impregnation method.

Specifically, copper nitrate trihydrate (Cu(NO$_3$)$_2$·3H$_2$O, 98%, Sigma-Aldrich Co.,

Ltd.) was dissolved in deionized water to prepare a 0.04 M copper nitrate II (Cu(NO$_3$)$_2$) solution. The H-BEA zeolite particles were respectively added to the copper nitrate solution, which were adjusted to impregnate 1 wt%, 3 wt%, 5 wt%, and 10 wt% of Cu.

The mixtures were respectively put in a rotary evaporator to all remove water, and Cu-impregnated H-BEA zeolite recovered therefrom were dried at 100 °C for 3 hours and calcined at 550 °C under air flow 200 mL/min by increasing the temperature at 1 °C/min for 6 hours.

**[Experimental Example 1: Evaluation of Adsorption/Desorption Performance According to Transition Metal Content]**

The catalysts prepared in Preparation Example 1-1 to Preparation Example 1-3 were subjected to hydrothermal treatment (degradation) with air including about 10 wt% of water at about 800 °C for about 24 hours, and then hydrocarbon adsorption/desorption evaluation before and after degradation was performed.

The hydrocarbon adsorption/desorption of the catalyst was evaluated by filling 60 mg of the catalyst in a reaction tube, performing pretreatment under a He flow at about 600 °C for about 30 minutes, supplying a mixed gas including C$_3$H$_6$ (162 ppm), C$_7$H$_8$ (162 ppm), CO (0.58 volume%), H$_2$ (0.19 volume%), O$_2$ (0.60 volume%), CO$_2$ (13.36 volume%), H$_2$O (10 volume%), and Ar/He-conveying gas (balance volume%) at about 70 °C for about 5 minutes for at about 100 cc/min, and then raising the temperature to about 300 °C at a rate of about 53 °C/min.

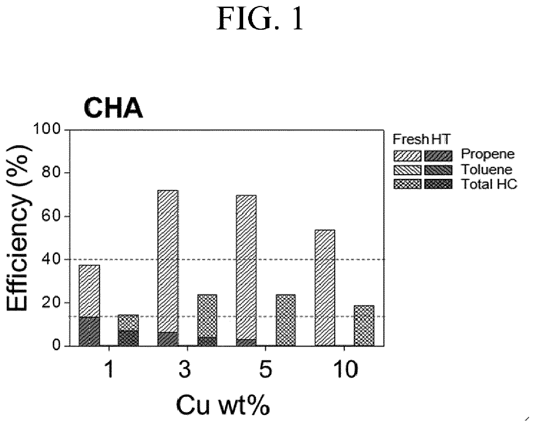

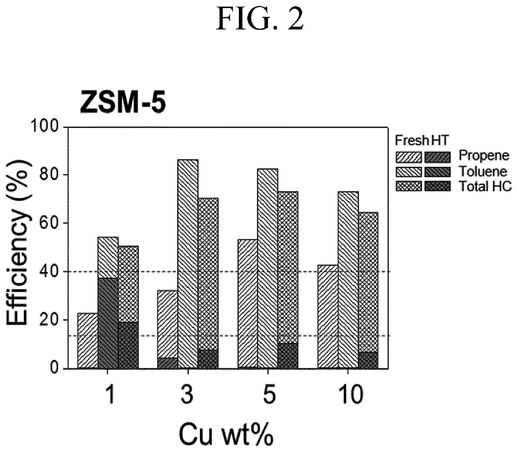

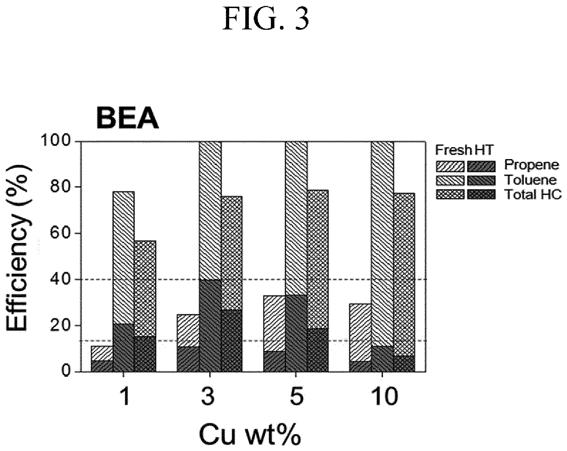

FIGS. 1 to 3 are graphs showing evaluation results of hydrocarbon adsorption/desorption of catalysts prepared in Preparation Examples 1-1 to 1-3.

In FIGS. 1 to 3, HT represents the result for the hydrothermal-treated catalyst, and Fresh represents the result for the fresh catalyst which is not hydrothermal-treated. Total HC represents the result for total hydrocarbons including Propene and Toluene.

Referring to FIGS. 1 to 3, after the hydrothermal degradation, the CHA catalyst containing 1 wt% of Cu (Preparation Example 1-1) exhibited the most excellent efficiency for the short-chain hydrocarbon, $C_3H_6$, and in addition, after the hydrothermal degradation, the BEA catalyst including 3 wt% of Cu (Preparation Example 1-3) exhibited the most excellent efficiency for the long-chain hydrocarbon, $C_7H_8$.

**[Preparation Example 2: Preparation of Hydrocarbon Adsorption Catalyst]**

**(Example 1)**

According to the adsorption performance evaluation depending on a transition metal content of Experimental Example 1, the CHA catalyst including 1 wt% of Cu (Preparation Example 1-1) and the BEA catalyst including 3 wt% of Cu (Preparation Example 1-3) were mixed in weight ratio of 7:3 to prepare catalyst for adsorbing hydrocarbon.

**(Example 2)**

The CHA catalyst including 1 wt% of Cu (Preparation Example 1-1) and the BEA catalyst including 3 wt% of Cu (Preparation Example 1-3) were mixed in weight ratio of 5:5 to prepare catalyst for adsorbing hydrocarbon.

**(Example 3)**

The CHA catalyst including 1 wt% of Cu (Preparation Example 1-1) and the BEA catalyst including 3 wt% of Cu (Preparation Example 1-3) were mixed in weight ratio of 3:7 to prepare catalyst for adsorbing hydrocarbon.

**[Experimental Example 2: Evaluation of Adsorption Performance According to Mixing Weight Ratio]**

The catalysts according to Examples 1 to 3 were hydrothermally treated (degraded) under the same condition as in Experimental Example 1, and hydrocarbon adsorptions thereof before and after the degradation were evaluated.

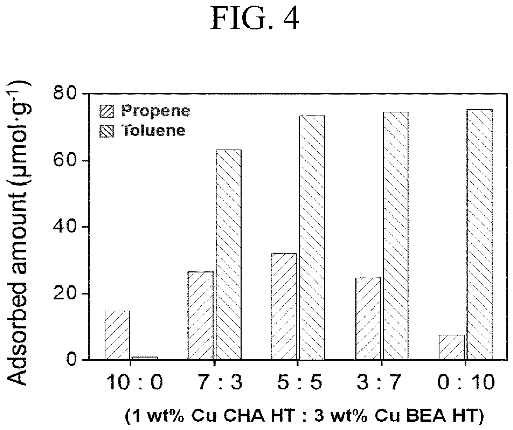

FIG. 4 is a graph showing the hydrocarbon adsorption evaluation results of the catalysts for adsorbing hydrocarbon prepared in Examples 1 to 3. The hydrocarbon adsorption of the catalyst was evaluated by filling 60 mg of the catalyst in a reaction tube, performing pretreatment under a He flow at about 600 °C for about 30 minutes, and supplying a mixed gas including $C_3H_6$ (162 ppm), $C_7H_8$ (162 ppm), CO (0.58 volume%), $H_2$ (0.19 volume%), $O_2$ (0.60 volume%), $CO_2$ (13.36 volume%), $H_2O$ (10 volume%), and Ar/He-conveying gas (balance volume%) at about 70 °C for about 5 minutes for at about 100 cc/min. In FIG. 4, 10:0 denotes a case of including the catalyst of Preparation Example 1-1 alone, 7:3 denotes the catalyst of Example 1, 5:5 denotes the catalyst of Example 2, 3:7 denotes the catalyst of Example 3, and 0:10 denotes a case of including the catalyst of Preparation Example 1-3 alone.

Referring to FIG. 4, when the catalyst of Preparation Example 1-1 was mixed with the catalyst of Preparation Example 1-3, both the adsorption performance of the short-chain hydrocarbon, $C_3H_6$ and the adsorption performance of the long-chain hydrocarbon, $C_7H_8$ were all improved, which resulted in a synergy effect, and when the catalyst of Preparation Example 1-1 and the catalyst of Preparation Example 1-3 were mixed in a weight ratio of 7:3 to 3:7, the adsorption performance was greatly improved.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope greater than or equal to appended claims.

**Claims**

1. A catalyst for adsorbing hydrocarbon, the catalyst comprising:

   a first catalyst configured to adsorb short-chain hydrocarbons and including zeolites having a pore size of about 0.30 nm to about 0.44 nm; and
   a second catalyst configured to adsorb a long-chain hydrocarbon and including zeolites ion-exchanged with a transition metal.

2. The catalyst of claim 1, wherein the first catalyst comprises a zeolite selected from the group consisting of CHA, DDR, SAPO-34, LTA, ABW, AEI, AVE, AFT, AFX, AVL, EAB, EEI, ERI, GME, IFY, IRN, KFI, LEV, LTL, LTN, MER, MOZ, OFF, PAU, RHO, RTE, SAS, SAT, SAV, SBS, SBT, SFW, SZR, TSC, UFI, WEN, and combinations thereof.

3. The catalyst of claim 1 or 2, wherein the second catalyst comprises zeolite including ZSM-5, BEA, MOR, Y, or a combination thereof.

**4.** The catalyst of any of claims 1 to 3, wherein the zeolites of the first catalyst are ion-exchanged with a transition metal.

**5.** The catalyst of any of claims 1 to 4, wherein the zeolites of the first catalyst are ion-exchanged with a transition metal selected from the group consisting of Cu, Fe, Co, Ti, Zn, Ag, Mn, Ni, Ce, and combinations thereof.

**6.** The catalyst of any of claims 1 to 5, wherein the first catalyst comprises about 0.1 wt% to about 3 wt% of the transition metal based on a total weight of the first catalyst.

**7.** The catalyst of any of claims 1 to 6, wherein the second catalyst comprises about 0.1 wt% to about 10 wt% of the transition metal based on a total weight of the second catalyst.

**8.** The catalyst of any of claims 1 to 7, wherein the catalyst for adsorbing hydrocarbon comprises the first catalyst and the second catalyst in a weight ratio of about 1:9 to about 9:1.

**9.** The catalyst of any of claims 1 to 8, wherein, when hydrocarbon adsorption and desorption are evaluated by performing hydrothermal degradation of the first catalyst or the second catalyst with air including about 10 wt% of water at about 800 °C for about 24 hours, the first catalyst has a treatment efficiency of greater than or equal to about 5% of the $C_3H_6$ and the second catalyst has a treatment efficiency of greater than or equal to about 15% of the $C_7H_8$; and wherein the evaluation is performed by filling 60 mg of the first catalyst or the second catalyst in a reaction tube, performing pretreatment under a He flow at about 600 °C for about 30 minutes, supplying a mixed gas including $C_3H_6$ (162 ppm), $C_7H_8$ (162 ppm), CO (0.58 volume%), $H_2$ (0.19 volume%), $O_2$ (0.60 volume%), $CO_2$ (13.36 volume%), $H_2O$ (10 volume%), and Ar/He-conveying gas (balance volume%) at about 70 °C for about 5 minutes at about 100 cc/min, and then raising the temperature to about 300 °C at a rate of about 53 °C/min.

**10.** A hydrocarbon trap comprising:

a substrate; and
a catalyst layer coated on the substrate and including the catalyst for adsorbing hydrocarbon according to any preceding claim.

**11.** The hydrocarbon trap of claim 10, wherein the first catalyst and the second catalyst are mixed in the catalyst layer.

**12.** The hydrocarbon trap of claim 10 or 11, wherein the catalyst layer comprises:

a first region coated with the first catalyst; and
a second region coated with the second catalyst.

**13.** The hydrocarbon trap of claim 12, wherein the first region is disposed in front of an exhaust gas stream and the second region is disposed in the rear of the exhaust gas stream.

# FIG. 1

## FIG. 2

FIG. 3

# FIG. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 105 691 B2 (FORD GLOBAL TECH LLC [US]) 23 October 2018 (2018-10-23) * claims; examples * ----- | 1-13 | INV. B01J23/72 B01D53/94 B01J29/80 |
| X | WO 2013/050964 A1 (BASF SE [DE]; BASF CHINA CO LTD [CN] ET AL.) 11 April 2013 (2013-04-11) * claims; examples * ----- | 1-13 | |
| X | WO 2011/125049 A1 (BASF SE [DE]; BASF CORP [US] ET AL.) 13 October 2011 (2011-10-13) * claims; examples * ----- | 1-13 | |

TECHNICAL FIELDS
SEARCHED        (IPC)

B01J
B01D

The present search report has been drawn up for all claims

| Place of search | Date of completion of the search | Examiner |
|---|---|---|
| The Hague | 7 December 2021 | Schoofs, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 3098

07-12-2021

| Patent document cited in search report | | Publication date | Patent family member(s) | | Publication date |
|---|---|---|---|---|---|
| US 10105691 | B2 | 23-10-2018 | CN | 107269350 A | 20-10-2017 |
| | | | DE | 102017105669 A1 | 05-10-2017 |
| | | | US | 2017282166 A1 | 05-10-2017 |
| WO 2013050964 | A1 | 11-04-2013 | BR | 112014007886 A2 | 11-04-2017 |
| | | | CN | 104066508 A | 24-09-2014 |
| | | | EP | 2766119 A1 | 20-08-2014 |
| | | | JP | 6348212 B2 | 27-06-2018 |
| | | | JP | 2014530097 A | 17-11-2014 |
| | | | JP | 2018027535 A | 22-02-2018 |
| | | | KR | 20140081852 A | 01-07-2014 |
| | | | WO | 2013050964 A1 | 11-04-2013 |
| WO 2011125049 | A1 | 13-10-2011 | CA | 2795614 A1 | 13-10-2011 |
| | | | CN | 102946998 A | 27-02-2013 |
| | | | CN | 104624228 A | 20-05-2015 |
| | | | EP | 2555866 A1 | 13-02-2013 |
| | | | JP | 5899199 B2 | 06-04-2016 |
| | | | JP | 2013527027 A | 27-06-2013 |
| | | | KR | 20130091639 A | 19-08-2013 |
| | | | MX | 360154 B | 24-10-2018 |
| | | | MY | 160970 A | 31-03-2017 |
| | | | WO | 2011125049 A1 | 13-10-2011 |
| | | | ZA | 201208260 B | 29-01-2014 |

EPO FORM P0459

## REFERENCES CITED IN THE DESCRIPTION

**Patent documents cited in the description**

- KR 1020200152737